# EUROPÄISCHE PATENTANMELDUNG

(11) **EP 4 344 930 A1**
(43) Veröffentlichungstag der Anmeldung: **03.04.2024**
(21) Anmeldenummer: 23194834.0
(22) Anmeldetag: 01.09.2023
(51) Int. Cl.: B60L 5/28, B60L 5/18, B60L 5/24, B60L 5/22, B60L 5/36

(54) **STROMABNEHMER**

(30) Priorität: 27.09.2022 DE 102022210217
(71) Anmelder: Siemens Mobility GmbH, 81739 München (DE)
(72) Erfinder: Blase, Bastian, 13156 Berlin (DE); Tolksdorf, Andre, 12555 Berlin (DE); Bühs, Florian, 10777 Berlin (DE)
(74) Vertreter: Siemens Patent Attorneys

(57) **Zusammenfassung**

Die Erfindung betrifft einen Stromabnehmer für ein Fahrzeug, aufweisend ein Halteelement, ein erstes Kontaktelement und ein zweites Kontaktelement. Das Halteelement ist eingerichtet, mit dem Fahrzeug verbunden zu werden und die Kontaktelemente zu halten. Mittels des Halteelements können zumindest zwei in vertikaler Richtung unterschiedliche Positionen der Kontaktelemente eingestellt werden. Ferner weist der Stromabnehmer eine Ausgleichsvorrichtung auf. Mittels der Ausgleichsvorrichtung kann ein maximaler vertikaler Abstand zwischen dem ersten Kontaktelement und dem zweiten Kontaktelement eingestellt werden. Mittels eines Begrenzungselements kann außerdem der maximale vertikale Abstand zwischen dem ersten Kontaktelement und dem zweiten Kontaktelement verringert werden.

## Beschreibung

Die Erfindung betrifft einen Stromabnehmer, ein Fahrzeug mit einem Stromabnehmer und ein Verfahren zum Betreiben eines Stromabnehmersystems.

Stromabnehmer (auch Pantographen genannt, abgekürzt als PAN bezeichnet) dienen dazu, eine für Traktion und Laden von Fahrzeugbatterien benötigte Energie durch konduktive Übertragung aus einer Oberleitung (OCL) zum Antrieb eines Fahrzeugs zu leiten. Dazu müssen die Stromabnehmer angehoben werden, um sich mit einer Oberleitung zu verbinden (sog. Andrahten) und bei Bedarf wieder von dieser gelöst werden, um sich in ihre Ruhelage zu begeben (sog. Abdrahten). Dabei können Stromabnehmer aus einer Unterarmsektion und einer Oberarmsektion bestehen, wobei diese aus verschiedenen Segmenten aufgebaut sein können. Eine Kombination aus der Unterarmsektion und der Oberarmsektion kann als Halteelement bezeichnet werden. Am oberen Ende der Oberarme können Kontaktelemente angeordnet sein, die den elektrischen Kontakt zur Oberleitung herstellen.

Auf Autobahnen (sog. eHighway) können Lastkraftwagen mittels solcher Stromabnehmer mit zwei über der Straße gespannten Oberleitungen (Pluspol und Minuspol) verbunden werden. Die Oberleitungen weisen dabei jeweils einen Fahrdraht für den Pluspol und den Minuspol auf. Allerdings sind Lastkraftwagen anders als Züge nicht spurgebunden, so dass sie einerseits einer höheren lateralen Fahrtoleranz unterliegen, also einer Fahrtoleranz seitlich zur Bewegungsrichtung. Diese kann durch Fahrerleistung, Straßentopologie, Scherwinde und anderen Einflussgrößen bedingt sein. Andererseits müssen Lastkraftwagen jederzeit die Spur wechseln können, beispielsweise zum Überholen, Ausweichen, Abfahren oder aufgrund von anderen Gründen.

Gleichzeitig sind beide Fahrdrähte montagebedingt und/oder alterungsbedingt selten perfekt auf der gleichen Höhe gegenüber der geneigten Fahrbahn angeordnet. Kommen zudem noch Wankbewegungen um eine Fahrtrichtungsachse des Fahrzeugs hinzu, beispielsweise bedingt durch Querwinde, eine nicht-optimale Fahrgeschwindigkeit bezogen auf eine vorhandene Fahrbahnüberhöhung, eine Überlagerung mit Seitenbewegungen oder aus anderen Gründen, so liegen beide Fahrdrähte aus Sicht des Fahrzeugs nicht auf der gleichen Höhe.

Für eine Energieübertragung ist jedoch eine gleichzeitige Kontaktierung beider Fahrdrähte unabdinglich. Aus diesem Grund wird in aus dem Stand der Technik bekannten Stromabnehmern eine Koppelkinematik aus zwei getrennten Oberarmen verwendet, um eine Hubdifferenz auszugleichen. Die beiden Oberarme sind dann antiparallel gekoppelt, so dass sich beim Herabdrücken des einen Oberarms der andere Oberarm um den gleichen Weg anhebt. Dadurch führt ein Kontakt des ersten Oberarms mit dem tiefer hängenden Fahrdraht zum Heranführen des zweiten Oberarms an den höher liegenden Fahrdraht. Dadurch ergibt sich eine wirtschaftliche Verfügbarkeit im Betrieb. Allerdings stellt diese Vorgehensweise jedoch eine erhöhte Herausforderung hinsichtlich einer Lichtraumprofil-Einhaltung dar, da beim seitlichen Herausfahren das bereits kontaktlose Kontaktelement um eine maximale Hubdifferenz angehoben wird und damit um die maximale Hubdifferenz höher als das noch verbundene Kontaktelement angehoben ist.

Handelt es sich zudem um ein hochdynamisches Fahrmanöver, kann der Lastkraftwagen zugleich entgegen einem Kurvenmittelpunkt geneigt sein, so dass das zuerst den Kontakt zur Oberleitung verlierende Kontaktelement zusätzlich gegenüber dem noch verbundenen Kontaktelement anhebt.

In anderen Anwendungsfällen eines Stromabnehmers für Fahrzeuge, beispielsweise im Bereich des Bergbaus, ist eine stärkere Wankkompensation von größerer Bedeutung. In diesem Fall müssen deutlich unebenere Fahrwege oder mit Hindernissen belegte Straßen befahren werden. Die dadurch stärkeren Wankbewegungen sollen trotzdem nicht die Verfügbarkeit nennenswert mindern. Um dies zu gewährleisten, ist eigentlich eine größere Hubdifferenz zwischen beiden Wippen nötig.

Der Erfindung liegt die Aufgabe zugrunde, einen für mehrere Anwendungsfälle einsetzbaren Stromabnehmer bereitzustellen, der im Vergleich zu den aus dem Stand der Technik bekannten Stromabnehmern flexibler ist. Eine weitere Aufgabe der Erfindung ist es, ein Fahrzeug mit einem solchen Stromabnehmer und ein Verfahren zum Betreiben eines Stromabnehmersystems mit einem solchen Stromabnehmer bereitzustellen.

Diese Aufgaben werden mit den Gegenständen der unabhängigen Patentansprüche gelöst. Vorteilhafte Weiterbildungen sind in den abhängigen Ansprüchen angegeben.

Die Erfindung betrifft einen Stromabnehmer für ein Fahrzeug, aufweisend ein Halteelement, ein erstes Kontaktelement und ein zweites Kontaktelement. Das Halteelement ist eingerichtet, mit dem Fahrzeug verbunden zu werden und die Kontaktelemente zu halten. Mittels des Halteelements können zumindest zwei in vertikaler Richtung unterschiedliche Positionen der Kontaktelemente eingestellt werden. Ferner weist der Stromabnehmer eine Ausgleichsvorrichtung auf. Mittels der Ausgleichsvorrichtung kann ein maximaler vertikaler Abstand zwischen dem ersten Kontaktelement und dem zweiten Kontaktelement eingestellt werden. Mittels eines Begrenzungselements kann außerdem der maximale vertikale Abstand zwischen dem ersten Kontaktelement und dem zweiten Kontaktelement verringert werden.

Das Halteelement kann dabei jeweils einen Unterarm und einen Oberarm für jedes der Kontaktelemente aufweisen. Es ist jedoch auch möglich, dass das Halteelement einen gemeinsamen Unterarm und nur jeweils einen Oberarm für die Kontaktelemente aufweist. Die mittels des Halteelements einstellbaren, in vertikaler Richtung unterschiedlichen, Positionen der Kontaktelemente können dabei beispielsweise eine Position im angedrahteten Zustand und eine Position im abgedrahteten Zustand umfassen.

Das Begrenzungselement dient dazu, abhängig von einer Fahrsituation den maximalen vertikalen Abstand zwischen dem ersten Kontaktelement und dem zweiten Kontaktelement zu verringern. Es gibt Fahrsituationen, bei denen eine große Hubdifferenz hilfreich ist, und solche, wo die Hubdifferenz möglichst gering sein sollte. Beim seitlichen Verlassen der Oberleitung sollte die Hubdifferenz verringert werden, um einen Lichtraum einhalten zu können. Ferner ist eine kleine Hubdifferenz auch beim unterfahren von Brücken hilfreich, da hier die Gefahr besteht, dass der Stromabnehmer mit der Brücke kollidiert, wenn ein Ausweichmanöver durchgeführt wird. Bewegt sich das Fahrzeug allerdings in Bereichen mit großen Straßenunebenheiten und führt Wankbewegungen aus, ist eine große Hubdifferenz von Vorteil. Durch das Begrenzungselement kann also die Hubdifferenz im Betrieb situationsabhängig verändert werden. Dabei kann es vorgesehen sein, dass die Ausgleichsvorrichtung und das Begrenzungselement in einem Ausgleichsbegrenzungselement angeordnet sind.

Das Begrenzungselement kann insbesondere mittels eines Steuerbefehls gesteuert werden. Der Steuerbefehl kann dabei insbesondere durch eine Sensorik ausgelöst werden. Beispielsweise könnte ein Ausweichmanöver mittels Beschleunigungssensor oder mittels Lenkeinschlagssensor detektiert und daraufhin der Steuerbefehl zur Begrenzung des maximalen vertikalen Abstands der Kontaktelemente ausgegeben werden. Ferner kann auch alternativ oder zusätzlich vorgesehen sein, dass ein Fahrzeugführer oder eine Fahrzeugführerin des Fahrzeugs den Steuerbefehl mittels einer Eingabe auslöst.

In einer Ausführungsform des Stromabnehmers weist das erste Kontaktelement ein um eine Querachse drehbar gelagertes erstes Oberrohr auf. Das zweite Kontaktelement weist ein um eine Querachse drehbar gelagertes zweites Oberrohr auf. Die Querachse ist dabei senkrecht zur vertikalen Richtung. Die Ausgleichsvorrichtung ist zwischen dem ersten Oberrohr und dem zweiten Oberrohr angeordnet und mit einem ersten Oberrohrende des ersten Oberrohrs und einem zweiten Oberrohrende des zweiten Oberrohrs mechanisch verbunden. Das Begrenzungselement kann in dieser Ausgestaltung ebenfalls zwischen dem ersten Oberrohrende und dem zweiten Oberrohrende angeordnet sein. Dies ermöglicht einen kompakten Aufbau des Stromabnehmers.

In einer Ausführungsform des Stromabnehmers weist das Begrenzungselement ein mechanisches Stellelement auf. Das mechanische Stellelement lässt in einer ersten Position einen größeren Abstand zwischen dem ersten Oberrohrende und dem zweiten Oberrohrende zu als in einer zweiten Position. Dabei kann das mechanische Stellelement zusätzlich Teil der Ausgleichsvorrichtung sein.

In einer Ausführungsform des Stromabnehmers ist zwischen dem ersten Kontaktelement und dem zweiten Kontaktelement ein isolierendes Mittelstück angeordnet ist, wobei das isolierende Mittelstück Teil der Ausgleichsvorrichtung ist. Gegebenenfalls kann das isolierende Mittelstück auch Teil des Begrenzungselements sein. Ein isolierendes Mittelstück zwischen den Kontaktelementen kann ferner ein redundantes Messsystem zum Erkennen, dass ein Fahrdraht zwischen den Kontaktelementen angeordnet ist beinhalten. Außerdem kann das isolierende Mittelstück als Abweiser gegen ein Unterhaken eines Fahrdrahtes zwischen den Kontaktelementen dienen. Ist das isolierende Mittelstück auch Teil der Ausgleichsvorrichtung und/oder der Begrenzungsvorrichtung, kann ferner eine zusätzliche Hubdifferenzbegrenzung, gegebenenfalls mit anpassbarem maximalem vertikalem Abstand erreicht werden.

In einer Ausführungsform des Stromabnehmers weist die Ausgleichsvorrichtung ein erstes verschiebbares Element und ein zweites verschiebbares Element auf. Das erste verschiebbare Element ist mit dem ersten Kontaktelement verbunden. Das zweite verschiebbare Element ist mit dem zweiten Kontaktelement verbunden. Das erste verschiebbare Element und das zweite verschiebbare Element sind in vertikaler Richtung gegeneinander verschiebbar. Das erste verschiebbare Element weist eine obere Klaue und eine untere Klaue auf. Das zweite verschiebbare Element weist eine mittlere Klaue auf. Die mittlere Klaue ist zwischen der oberen Klaue und der unteren Klaue angeordnet. In einer Grundeinstellung ist die mittlere Klaue zwischen der oberen Klaue und der unteren Klaue beweglich. Die obere Klaue und die untere Klaue begrenzen in dieser Ausführungsform die Bewegung der mittleren Klaue. Damit gibt ein Abstand zwischen der oberen Klaue und der unteren Klaue eine maximale Hubdifferenz beziehungsweise einen maximalen vertikalen Abstand der Kontaktelemente vor. Neben dem vertikalen verschieben kann zusätzlich vorgesehen sein, dass sich die verschiebbaren Elemente auch gegeneinander senkrecht zur vertikalen Richtung verschieben. Dies kann sich aus einer Kinematik des Halteelements und der Ausgleichsvorrichtung ergeben.

In einer Ausführungsform des Stromabnehmers wird in einer Begrenzungseinstellung ein Bewegungsspielraum der mittleren Klaue zwischen der oberen Klaue und der unteren Klaue mittels des Begrenzungselements begrenzt. Durch die Begrenzung des Bewegungsspielraums wird also die maximale Hubdifferenz beziehungsweise der maximale vertikale Abstand der Kontaktelemente reduziert.

In einer Ausführungsform des Stromabnehmers umfasst das Begrenzungselement eine Zugvorrichtung zwischen dem ersten Kontaktelement und dem zweiten Kontaktelement. Die Zugvorrichtung kann dabei eingerichtet sein, einen Abstand zwischen dem ersten Kontaktelement und dem zweiten Kontaktelement zu beeinflussen. Mit der Zugvorrichtung kann ein einfacher Aufbau des Begrenzungselements erreicht werden.

In einer Ausführungsform des Stromabnehmers ist die Zugvorrichtung eingerichtet, den Abstand zwischen dem ersten Kontaktelement und dem zweiten Kontaktelement zu verringern.

In einer Ausführungsform des Stromabnehmers weist das Begrenzungselement ferner zwei Aufnahmen und einen formschlüssigen Körper auf. Die Zugvorrichtung ist eingerichtet, den formschlüssigen Körper in Formschluss mit den Aufnahmen zu bringen. Dies ermöglicht einen einfachen Aufbau eines Begrenzungselements.

In einer Ausführungsform des Stromabnehmers beinhaltet das Begrenzungselement einen pneumatischen Muskel. Der pneumatische Muskel kann dabei insbesondere eine Zugvorrichtung sein und einen Abstand zwischen dem ersten Kontaktelement und dem zweiten Kontaktelement verringern.

In einer Ausführungsform des Stromabnehmers kann der pneumatische Muskel bei mittels eines Ventils gesteuert werden. Dies kann beispielsweise aufgrund des weiter oben bereits beschriebenen Steuerbefehls erfolgen.

In einer Ausführungsform des Stromabnehmers können die zwei in vertikaler Richtung unterschiedlichen Positionen der Kontaktelemente mittels eines Balgs eingestellt werden. Beim Beaufschlagen des Balgs mit Druck wird eine obere Position der Kontaktelemente und bei Entspannen des Balgs eine untere Position der Kontaktelemente eingenommen. Eine Druckleitung ist vom Balg über ein Ventil zum pneumatischen Muskel geführt. Mittels des beim Entspannen des Balgs austretenden Gases wird der pneumatische Muskel mit Druck derart beaufschlagt, dass das Begrenzungselement den maximalen vertikalen Abstand zwischen dem ersten Kontaktelement und dem zweiten Kontaktelement verringert. So kann beispielsweise ein gleichzeitiges Abdrahten und Verringern des maximalen vertikalen Abstands erreicht und mit einem Steuerbefehl gesteuert werden.

In einer Ausführungsform des Stromabnehmers weist das Halteelement eine Längsachse auf, die senkrecht zur vertikalen Richtung ist. Das Halteelement weist ferner einen Antrieb zur Ausrichtung des Halteelements bezüglich der Längsachse auf. So kann beispielsweise erreicht werden, dass der Stromabnehmer unabhängig von einer Lage des Fahrzeugs immer im Wesentlichen senkrecht steht und Wankbewegungen des Fahrzeugs ausgeglichen werden.

In einer Ausführungsform des Stromabnehmers weisen die Kontaktelemente jeweils zumindest eine Schleifleiste auf.

Die Erfindung betrifft ferner ein Fahrzeug mit einem erfindungsgemäßen Stromabnehmer. Das Fahrzeug kann beispielsweise ein Schienenfahrzeug sein, ist aber insbesondere ein Straßenfahrzeug. Das Fahrzeug kann beispielsweise einen Elektromotor zum Antrieb des Fahrzeugs und gegebenenfalls einen Akkumulator zur Speicherung von elektrischer Energie aufweisen. Der Elektromotor kann dabei insbesondere über eine Oberleitung gespeist sein, wobei der Stromabnehmer dazu dient, den Elektromotor mit der Oberleitung zu verbinden. Ferner kann auch der Akkumulator über die Oberleitung geladen werden.

Die Erfindung betrifft ferner ein Verfahren zum Betreiben eines Stromabnehmersystems mit einem erfindungsgemäßen Stromabnehmer und einer Steuereinheit. Dabei werden die folgenden Schritte durchgeführt, beispielsweise durch die Steuereinheit. Zunächst wird ein Steuerbefehl empfangen und anschließend der maximale vertikale Abstand anhand des Steuerbefehls durch Einwirken auf das Begrenzungselement begrenzt.

Die oben beschriebenen Eigenschaften, Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen in jeweils schematisierter Darstellung:
FIG 1 einen Stromabnehmer;
FIG 2 Positionen von Kontaktelementen des Stromabnehmers nach einer ersten Ausgestaltung;
FIG 3 Positionen von Kontaktelementen des Stromabnehmers nach einer zweiten Ausgestaltung;
FIG 4 Wippen von Kontaktelementen;
FIG 5 einen Ausschnitt eines Stromabnehmers mit einer Ausgleichsvorrichtung;
FIG 6 eine Ausgleichsvorrichtung mit Begrenzungselement;
FIG 7 die Ausgleichsvorrichtung mit Begrenzungselement der FIG 6 in einer weiteren Position;
FIG 8 die Ausgleichsvorrichtung mit Begrenzungselement der FIG 6 in einer weiteren Position;
FIG 9 eine Ausgleichsvorrichtung mit Begrenzungselement;
FIG 10 eine Ausgleichsvorrichtung mit Begrenzungselement;
FIG 11 eine Ausgleichsvorrichtung mit Begrenzungselement;
FIG 12 eine Ausgleichsvorrichtung mit Begrenzungselement;
FIG 13 eine Ausgleichsvorrichtung mit Begrenzungselement;
FIG 14 eine Ausgleichsvorrichtung mit Begrenzungselement;
FIG 15 eine Ausgleichsvorrichtung mit Begrenzungselement;
FIG 16 eine Ausgleichsvorrichtung mit Begrenzungselement;
FIG 17 einen möglichen Antrieb für eine Ausgleichsvorrichtung mit Begrenzungselement;
FIG 18 ein Fahrzeug mit einem Stromabnehmer.

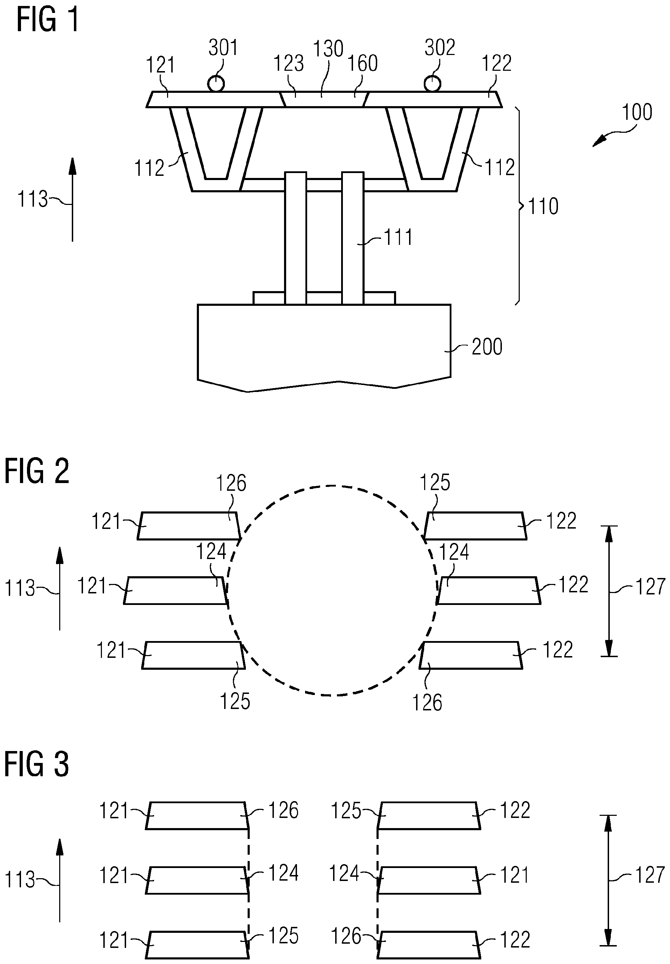

FIG 1 zeigt einen Stromabnehmer 100, der insbesondere für ein Fahrzeug geeignet ist. Der Stromabnehmer 100 kann auch als Pantograph bezeichnet werden. Der Stromabnehmer 100 weist ein Halteelement 110, ein erstes Kontaktelement 121 und ein zweites Kontaktelement 122 auf. Das Halteelement 110 weist dabei einen gemeinsamen Unterarm 111 und jeweils einen Oberarm 112 für jedes der Kontaktelemente 121, 122 auf. Mittels des Halteelements 110 sind in vertikaler Richtung 113 unterschiedliche Positionen der Kontaktelemente 121, 122 einstellbar. Ferner ist ein Teil eines Fahrzeugs 200 gezeigt, mit dem der Stromabnehmer 100 verbunden ist. In FIG 1 ist dabei ein angedrahteter Zustand gezeigt, bei dem das erste Kontaktelement 121 in mechanischem Kontakt mit einem ersten Fahrdraht 301 und das zweite Kontaktelement 122 in mechanischem Kontakt mit einem zweiten Fahrdraht 302 ist. Mittels des Halteelements 110 kann neben dem angedrahteten Zustand auch ein abgedrahteter Zustand eingestellt werden, bei dem die Kontaktelemente 121, 122 nicht mehr in mechanischem Kontakt mit den Fahrdrähten 301, 302 sind. Dabei können die Kontaktelemente 121, 122 entgegen der vertikalen Richtung 113 hin zum Fahrzeug 200 bewegt werden.

Der Stromabnehmer 100 kann dazu dienen, eine für Traktion des Fahrzeugs 200 und/oder das Laden eines Akkus des Fahrzeugs 200 benötigte Energie durch konduktive Übertragung aus einer Oberleitung bestehend unter anderem aus den Fahrdrähten 301, 302 zum Antrieb des Fahrzeugs 200 zu leiten. Dazu kann der Stromabnehmer 100 angehoben werden, um sich mit der Oberleitung zu verbinden (sog. Andrahten) und bei Bedarf wieder von dieser gelöst werden, um sich in ihre Ruhelage zu begeben (sog. Abdrahten).

Auf Autobahnen können Lastkraftwagen mittels solcher Stromabnehmer 100 mit zwei über der Straße gespannten Fahrdrähten 301, 302, wobei ein Pluspol und ein Minuspol mittels der Fahrdrähte 301, 302 zur Verfügung gestellt wird, verbunden werden. Allerdings sind Lastkraftwagen anders als Züge nicht spurgebunden, so dass sie einerseits einer höheren lateralen Fahrtoleranz unterliegen, also einer Fahrtoleranz seitlich zur Bewegungsrichtung. Diese kann durch Fahrerleistung, Straßentopologie, Scherwinde und anderen Einflussgrößen bedingt sein. Andererseits müssen Lastkraftwagen jederzeit die Spur wechseln können, beispielsweise zum Überholen, Ausweichen, Abfahren oder aufgrund von anderen Gründen.

Gleichzeitig sind beide Fahrdrähte 301, 302 montagebedingt und/oder alterungsbedingt selten perfekt auf der gleichen Höhe gegenüber der geneigten Fahrbahn angeordnet. Kommen zudem noch Wankbewegungen um eine Fahrtrichtungsachse des Fahrzeugs 200 hinzu, beispielsweise bedingt durch Querwinde, eine nicht-optimale Fahrgeschwindigkeit bezogen auf eine vorhandene Fahrbahnüberhöhung, eine Überlagerung mit Seitenbewegungen oder aus anderen Gründen, so liegen beide Fahrdrähte 301, 302 aus Sicht des Fahrzeugs 200 nicht auf der gleichen Höhe.

Für eine Energieübertragung ist jedoch eine gleichzeitige Kontaktierung beider Fahrdrähte 301, 302 mit den Kontaktelementen 121, 122 unabdinglich. Hierzu ist in FIG 1 ein isolierendes Mittelstück 123 zwischen den Kontaktelementen 121, 122 vorgesehen. Das Mittelstück 123 dient dabei als Ausgleichsvorrichtung 130 und als Begrenzungselement 160. Mittels der Ausgleichsvorrichtung 130 kann eine Hubdifferenz der Kontaktelemente 121, 122 ausgeglichen werden. Die beiden Oberarme 112 sind dann antiparallel gekoppelt, so dass sich beim Herabdrücken des einen Oberarms 112 der andere Oberarm 112 um den gleichen Weg anhebt. Dadurch führt ein Kontakt des ersten Oberarms 112 mit einem tiefer hängenden Fahrdraht zum Heranführen des zweiten Oberarms 112 an den höher liegenden Fahrdraht. Mittels der Ausgleichsvorrichtung 130 kann also ein maximaler vertikaler Abstand (Abstand in der vertikalen Richtung 113) zwischen dem ersten Kontaktelement 121 und dem zweiten Kontaktelement 122 eingestellt werden. Das Mittelstück 123 dient ferner als Begrenzungselement 160. Mittels des Begrenzungselements 160 kann der maximale vertikale Abstand zwischen dem ersten Kontaktelement 121 und dem zweiten Kontaktelement 122 verringert werden. Zusätzlich kann das isolierende Mittelstück 123 zwischen den Kontaktelementen 121, 122 ein redundantes Messsystem zum Erkennen, dass ein Fahrdraht 301, 302 zwischen den Kontaktelementen 121, 122 angeordnet ist, dienen. Außerdem kann das isolierende Mittelstück 123 als Abweiser gegen ein Unterhaken eines Fahrdrahtes 301, 302 zwischen den Kontaktelementen 121, 122 dienen.

Es kann alternativ zur Darstellung der FIG 1 vorgesehen sein, dass jeweils ein Unterarm 111 und ein Oberarm 112 für jedes der Kontaktelemente 121, 122 angeordnet ist. Die Ausgleichsvorrichtung 130 und das Begrenzungselement 160 können dann beispielsweise dadurch realisiert sein, dass ein Antrieb zum Andrahten und Abdrahten der Kontaktelemente 121, 122 einen maximalen Abstand der Kontaktelemente 121, 122 einstellt.

Das Begrenzungselement 160 dient dazu, abhängig von einer Fahrsituation den maximalen vertikalen Abstand zwischen dem ersten Kontaktelement 121 und dem zweiten Kontaktelement 122 zu verringern. Es gibt Fahrsituationen, bei denen eine große Hubdifferenz zwischen den Kontaktelementen 121, 122 hilfreich ist, und solche, wo die Hubdifferenz möglichst gering sein sollte. Beim seitlichen Verlassen der Oberleitung 301, 302 sollte die Hubdifferenz verringert werden, um einen Lichtraum einhalten zu können. Ferner ist eine kleine Hubdifferenz auch beim Unterfahren von Brücken hilfreich, da hier die Gefahr besteht, dass der Stromabnehmer 100 mit der Brücke kollidiert, wenn ein Ausweichmanöver durchgeführt wird. Bewegt sich das Fahrzeug 200 allerdings in Bereichen mit großen Straßenunebenheiten und führt Wankbewegungen aus, ist eine große Hubdifferenz von Vorteil. Durch das Begrenzungselement 160 kann also die Hubdifferenz im Betrieb situationsabhängig verändert werden. Dabei kann es vorgesehen sein, dass die Ausgleichsvorrichtung 130 und das Begrenzungselement 160 in einem Ausgleichsbegrenzungselement angeordnet sind, wie in FIG 1 gezeigt.

Das Begrenzungselement 160 kann insbesondere mittels eines Steuerbefehls gesteuert werden. Der Steuerbefehl kann dabei insbesondere durch eine Sensorik ausgelöst werden. Beispielsweise könnte ein Ausweichmanöver mittels Beschleunigungssensor oder mittels Lenkeinschlagssensor detektiert und daraufhin der Steuerbefehl zur Begrenzung des maximalen vertikalen Abstands der Kontaktelemente 121, 122 ausgegeben werden. Ferner kann auch ein Positionssensor, beispielsweise ein GPS-Sensor zur Ausgabe des Steuerbefehls führen, wenn aufgrund einer örtlichen Situation wie beispielsweise einer Brücke die Hubdifferenz verringert werden sollte. Ferner kann auch alternativ oder zusätzlich vorgesehen sein, dass ein Fahrzeugführer oder eine Fahrzeugführerin des Fahrzeugs 200 den Steuerbefehl mittels einer Eingabe auslöst.

FIG 2 zeigt eine vereinfachte Darstellung des Stromabnehmers 100, bei der nur die Kontaktelemente 121, 122 dargestellt sind. Die Kontaktelemente 121, 122 sind dabei in drei unterschiedlichen Kontaktelementpositionen 124, 125, 126 angeordnet. In einer ersten Kontaktelementposition 124 sind die Kontaktelemente 121, 122 im Wesentlichen auf einer Ebene, so dass im Wesentlichen keine Hubdifferenz vorliegt. In einer zweiten Kontaktelementposition 125 ist das erste Kontaktelement 121 nach unten und das zweite Kontaktelement 122 um den gleichen Betrag nach oben bewegt. In einer dritten Kontaktelementposition 126 ist das erste Kontaktelement 121 nach oben und das zweite Kontaktelement 122 um den gleichen Betrag nach unten bewegt. Die in der zweiten Kontaktelementposition 125 und in der dritten Kontaktelementposition 126 eingenommene Hubdifferenz entspricht dabei dem maximalen vertikalen Abstand 114. In FIG 2 ist gezeigt, dass sich die Kontaktelemente 121, 122 auf einer Kreisbahn bewegen, wie durch die gestrichelte Linie angedeutet.

FIG 3 zeigt ebenfalls eine vereinfachte Darstellung des Stromabnehmers 100, die der FIG 2 entspricht, sofern im Folgenden keine Unterschiede beschrieben sind. In dieser Ausgestaltung bewegen sich die Kontaktelemente 121, 122 nicht auf einer Kreisbahn, sondern linear in der vertikalen Richtung 113. Ansonsten sind die Aussagen über die Kontaktelementpositionen 124, 125, 126 identisch zu FIG 2.

Sowohl in FIG 2 als auch in FIG 3 kann das Begrenzungselement 160 genutzt werden, um den maximalen vertikalen Abstand 114 zu verringern. Dann ist in der zweiten Kontaktelementposition 125 ist das erste Kontaktelement 121 nach unten und das zweite Kontaktelement 122 um den gleichen Betrag nach oben bewegt, jedoch nicht so weit wie in den Darstellungen der FIG 2 und 3. In der dritten Kontaktelementposition 126 ist das erste Kontaktelement 121 nach oben und das zweite Kontaktelement 122 um den gleichen Betrag nach unten bewegt, jedoch ebenfalls nicht so weit wie in den Darstellungen der FIG 2 und 3. Das Mittelstück 123 kann insbesondere fest oder schwimmend mit den Kontaktelementen 121, 122 verbunden sein und so entweder die Ausgestaltung der FIG 2 oder die Ausgestaltung der FIG 3 realisiert sein.

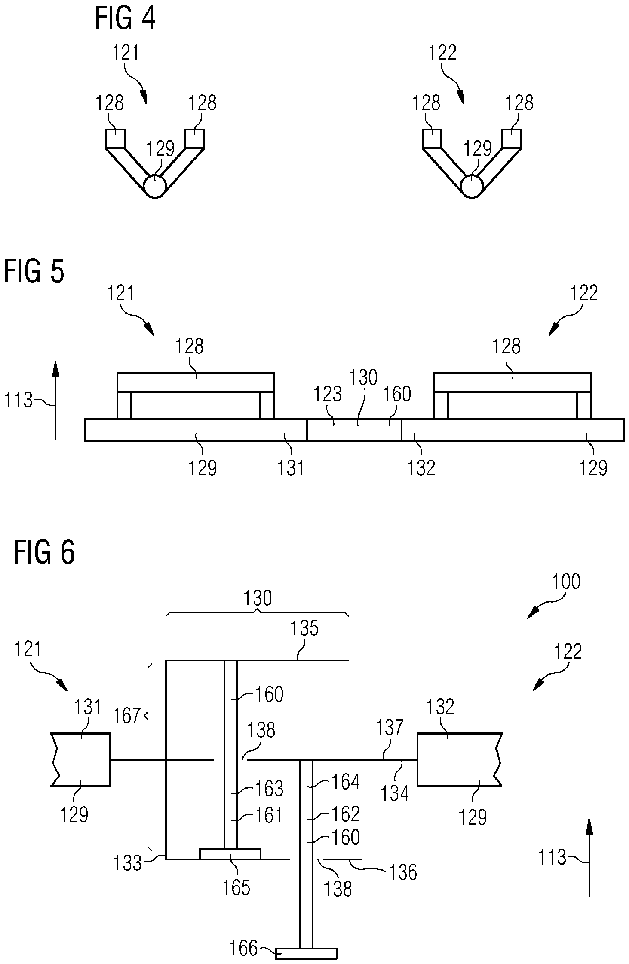

FIG 4 zeigt eine seitliche Ansicht eines Ausführungsbeispiels der Kontaktelemente 121, 122. Beide Kontaktelemente 121, 122 weisen zwei Schleifleisten 127 und ein Oberrohr 128 auf, wobei das Oberrohr 128 zwischen und unterhalb der Schleifleisten 127 angeordnet ist. Eine solche Anordnung stellt ein effizientes Kontaktelement 121, 122 dar, bei dem sich Höhenunterschiede zwischen Fahrdrähten 301, 302 und Fahrzeug 200 durch Verkippen der Kontaktelemente 121, 122 um die Oberrohre 128 ausgleichen lassen.

FIG 5 zeigt eine Draufsicht von vorne auf einen Ausschnitt eines Stromabnehmers 100, bei dem die Kontaktelemente 121, 122 wie in FIG 4 gezeigt ausgestaltet sind. Das isolierende Mittelstück 123 ist insbesondere mit den beiden Oberrohren 129 verbunden, am ersten Kontaktelement 121 mit einem ersten Oberrohrende 131 und am zweiten Kontaktelement 122 mit einem zweiten Oberrohrende 132. Ferner kann das im Zusammenhang mit FIG 1 erläuterte Halteelement 110 jeweils an den Oberrohren 129 befestigt sein. Insbesondere kann jeweils ein Oberarm 112 mit jeweils einem Oberrohr 129 verbunden sein.

Das Oberrohr 129 des ersten Kontaktelements 121 kann um eine Querachse drehbar gelagert sein. Das Oberrohr des zweiten Kontaktelements 122 kann ebenfalls um eine Querachse drehbar gelagert sein. Dies ermöglicht das bereits erläuterte Verkippen der Kontaktelemente 121, 122. Die Querachse ist dabei senkrecht zur vertikalen Richtung 113. Die Ausgleichsvorrichtung 130 ist zwischen dem ersten Oberrohr 129 und dem zweiten Oberrohr 129 angeordnet und mit einem ersten Oberrohrende 131 des ersten Oberrohrs 129 und einem zweiten Oberrohrende 132 des zweiten Oberrohrs 129 mechanisch verbunden. Die Ausgleichsvorrichtung 130 kann dabei Teil des Mittelstücks 123 sein.

In einem Ausführungsbeispiel weist das Begrenzungselement 160 ein mechanisches Stellelement auf, wobei das mechanische Stellelement in einer ersten Position einen größeren Abstand zwischen dem ersten Oberrohrende 131 und dem zweiten Oberrohrende 132 zulässt als in einer zweiten Position.

Im Folgenden werden Ausführungsbeispiele einer zwischen den Oberrohrenden 131, 132 angeordneten Ausgleichsvorrichtung und eines zwischen den Oberrohrenden 131, 132 angeordneten Kontaktelements beschrieben. Es ist jedoch auch möglich, die Ausgleichsvorrichtung 130 und das Begrenzungselement an anderen Orten anzubringen, beispielsweise an den Oberarmen 112 des Halteelements 110. Die Ausführungsbeispiele sind auch für diese Ausgestaltungen umsetzbar.

FIG 6 zeigt einen Ausschnitt eines Stromabnehmers 100, bei dem ein Bereich zwischen den Oberrohrenden 131, 132 vergrößert dargestellt ist. Die Ausgleichsvorrichtung 130 weist ein erstes verschiebbares Element 133 und ein zweites verschiebbares Element 134 auf. Das erste verschiebbare Element 133 ist mit dem ersten Kontaktelement 121, hier mittels Verbindung zum ersten Oberrohr 131, verbunden, wobei auch an andere dem ersten Kontaktelement 121 zuzuordnende Elemente wie beispielsweise dem Oberarm 112 des ersten Kontaktelements 121 verbunden sein kann. Das zweite verschiebbare Element 134 ist mit dem zweiten Kontaktelement 122, hier mittels Verbindung zum zweiten Oberrohr 132, verbunden, wobei auch an andere dem zweiten Kontaktelement 122 zuzuordnende Elemente wie beispielsweise dem Oberarm 112 des zweiten Kontaktelements 122 verbunden sein kann. Das erste verschiebbare Element 133 und das zweite verschiebbare Element 134 sind in vertikaler Richtung 113 gegeneinander verschiebbar. Das erste verschiebbare Element 133 weist eine obere Klaue 135 und eine untere Klaue 136 auf. Das zweite verschiebbare Element 134 weist eine mittlere Klaue 137 auf. Die mittlere Klaue 137 ist zwischen der oberen Klaue 135 und der unteren Klaue 136 angeordnet. In einer Grundeinstellung ist die mittlere Klaue 137 zwischen der oberen Klaue 135 und der unteren Klaue 136 beweglich. Diese Grundeinstellung ist in FIG 6 dargestellt. Die mittlere Klaue 137 kann zwischen der oberen Klaue 135 und der unteren Klaue 136 bewegt werden. Dadurch können die in den FIG 2 und 3 erläuterten Kontaktelementpositionen 124, 125, 126 eingenommen werden. Die Ausgleichsvorrichtung 130 kann hierzu einen beispielsweise aus dem Stand der Technik bekannten und hier nicht gezeigten Seilzug aufweisen, um bei Absenken oder Anheben des ersten Kontaktelements 121 das zweite Kontaktelement um denselben Betrag Anzuheben beziehungsweise Abzusenken.

In FIG 6 ist ferner ein Begrenzungselement 160 dargestellt. Das Begrenzungselement 160 beinhaltet ein erstes Stellelement 161 und ein zweites Stellelement 162. Das erste Stellelement 161 ist als erster pneumatischer Muskel 163 ausgestaltet. Der erste pneumatische Muskel 163 ist dabei mit einem Ende an der oberen Klaue 135 befestigt, durch eine Öffnung 138 der mittleren Klaue 137 geführt und am anderen Ende mit einem ersten Anschlag 165 versehen. Das zweite Stellelement 162 ist als zweiter pneumatischer Muskel 164 ausgestaltet. Der zweite pneumatische Muskel 164 ist mit einem Ende an der mittleren Klaue 137 befestigt und durch eine Öffnung 138 der unteren Klaue 136 geführt. Am anderen Ende weist der zweite pneumatische Muskel 164 einen zweiten Anschlag 166 auf.

Die pneumatischen Muskeln 163, 164 können dabei ein Membran-Kontraktions-System umfassen, das als Zugaktor wirkt, und dem biologischen Muskel nachempfunden sein. Pneumatische Muskeln allgemein können aus einem druckdichten Kontraktionsschlauch mit einem eingearbeiteten rautenförmigen Gewebenetz aus hochfesten Fasern bestehen. Wird der Kontraktionsschlauch mit Druck beaufschlagt, dehnt er sich in Querrichtung aus und zieht sich in der Längsrichtung zusammen (in der Anordnung der FIG 6 wäre die Längsrichtung parallel zur vertikalen Richtung 113). Die eingearbeiteten Fasern sind dafür zuständig, den Kontraktionsschlauch in Form zu halten und die Ausdehnung auf eine Längenänderung zu beschränken und zu stabilisieren.

Solche pneumatischen Muskeln verfügen über keine beweglichen und/oder verschiebbaren Teile, arbeiten weitestgehend reibungsfrei und ermöglichen gleichförmige und sehr langsame Bewegungen ruckfrei ohne Stick-Slip-Effekt, aber auch sehr schnelle Bewegungen und sehr hohe Arbeitsfrequenzen. Ferner kann vorgesehen sein, dass pneumatische Muskeln bei Änderung einer äußeren Belastung wie eine Feder verhalten der Kraftrichtung folgen. Dadurch lässt sich der pneumatische Muskel auch als "Pneumatische Feder" mit verschiedenen "Federkennlinen" einsetzen, welche durch das Luftvolumen und den Luftdruck bestimmt werden. Auch die im Folgenden beschriebenen Ausgestaltungen mit pneumatischen Muskeln können die in diesem und dem vorherigen Absatz erläuterten Ausgestaltungen des pneumatischen Muskels umfassen.

In FIG 6 sind die pneumatischen Muskeln 163, 164 im entspannten, also im längst-möglichen, Zustand gezeigt. Der volle Bereich zwischen der oberen Klaue 135 und der unteren Klaue 136 steht für die mittlere Klaue 137 zur Verfügung. Ein Bewegungsspielraum 167 der mittleren Klaue 137 ist also maximal. Die Anschläge 165, 166 können beispielsweise als Platten oder als Bolzen ausgestaltet sein.

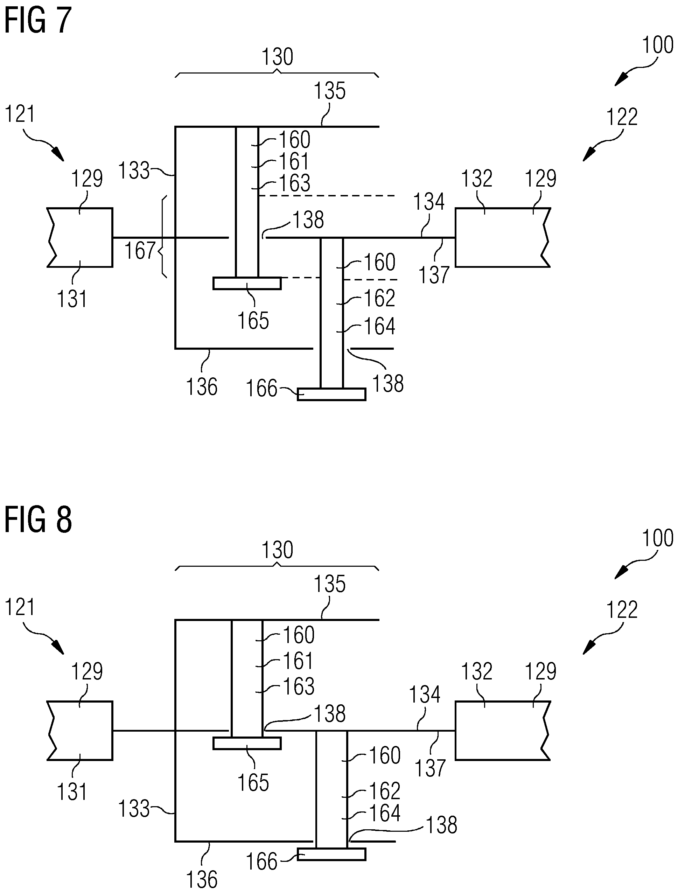

FIG 7 zeigt den Ausschnitt des Stromabnehmers 100 der FIG 6, nachdem die pneumatischen Muskeln 163, 164 mittels Druckluft teilweise zusammengezogen wurden. Dadurch ist der erste Anschlag 165 näher an der Öffnung 138 der mittleren Klaue 137 und der zweite Anschlag 166 näher an der Öffnung 138 der unteren Klaue 136. Dadurch ist der Bewegungsspielraum 167 eingeschränkt, so dass sich die mittlere Klaue 137 nur noch in einem eingeschränkten Bereich bewegen kann. Somit können sich auch die Kontaktelemente 121, 122 nur noch eingeschränkt gegeneinander bewegen.

FIG 8 zeigt den Ausschnitt des Stromabnehmers 100 der FIG 6 und 7, nachdem die pneumatischen Muskeln 163, 164 mittels Druckluft vollständig zusammengezogen wurden. Der erste Anschlag 165 liegt nun an der mittleren Klaue 137 an. Der zweite Anschlag 166 liegt nun an der unteren Klaue 136 an. In diesem Fall kann sich die mittlere Klaue 137 nicht mehr relativ zu der oberen Klaue 135 beziehungsweise der unteren Klaue 136 bewegen. Somit können sich auch die Kontaktelemente 121, 122 nicht mehr gegeneinander bewegen.

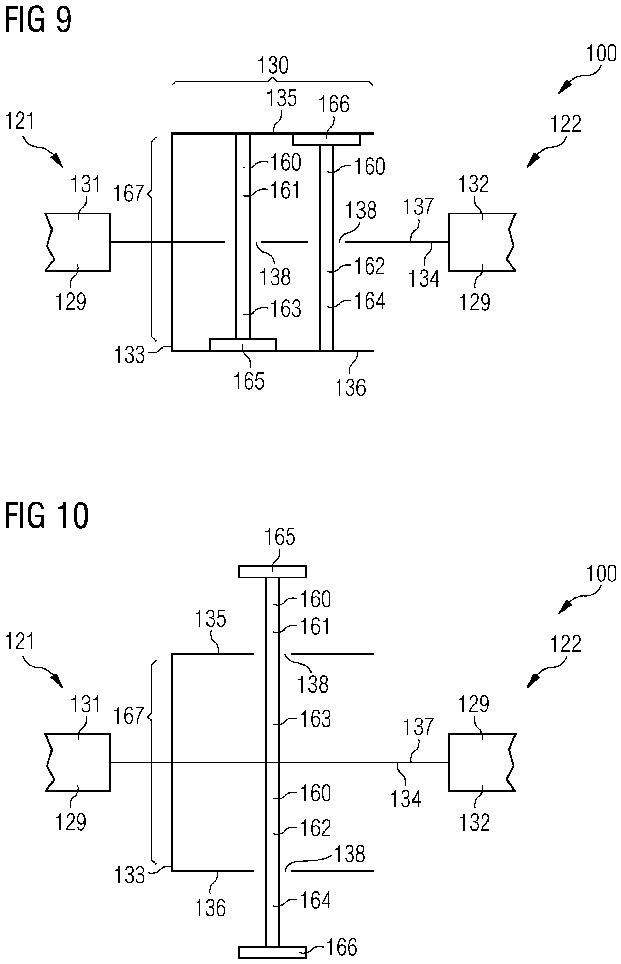

FIG 9 zeigt ein weiteres Ausführungsbeispiel eines Ausschnitts des Stromabnehmers 100, der so wie im Zusammenhang mit den FIG 6 bis 8 erläutert aufgebaut ist, sofern im Folgenden keine Unterschiede beschrieben sind. Das zweite Stellelement 162 und damit der zweite pneumatische Muskel 164 ist mit einem Ende an der unteren Klaue 136 befestigt und durch eine Öffnung 138 der mittleren Klaue 137 geführt. Am anderen Ende weist der zweite pneumatische Muskel 164 ebenfalls der zweite Anschlag 166 auf. Die mittlere Klaue 137 kann sich dadurch zwischen den Anschlägen 165, 166 bewegen. Werden die pneumatischen Muskeln 163, 164 zusammengezogen (nicht in FIG 9 gezeigt), so bewegen sich die Anschläge 165, 166 aufeinander zu und begrenzen damit den Bewegungsspielraum 167 der mittleren Klaue 137. Werden die pneumatischen Muskeln 163, 164 vollständig zusammengezogen (nicht in FIG 9 gezeigt), so liegen die Anschläge 165, 166 an der mittleren Klaue 137 an, so dass sich die mittlere Klaue 137 nicht mehr bewegen kann.

FIG 10 zeigt ein weiteres Ausführungsbeispiel eines Ausschnitts des Stromabnehmers 100, der so wie im Zusammenhang mit den FIG 6 bis 8 erläutert aufgebaut ist, sofern im Folgenden keine Unterschiede beschrieben sind. Das erste Stellelement 161 und damit der erste pneumatische Muskel 163 ist mit einem Ende an der mittleren Klaue 137 befestigt und durch eine Öffnung 138 der oberen Klaue 135 geführt. Am anderen Ende des ersten pneumatischen Muskels 163 ist ebenfalls der erste Anschlag 165 angeordnet. Die mittlere Klaue 137 kann sich dadurch zwischen den Anschlägen 165, 166 bewegen. Werden die pneumatischen Muskeln 163, 164 zusammengezogen (nicht in FIG 10 gezeigt), so bewegen sich die Anschläge 165, 166 aufeinander zu und begrenzen damit den Bewegungsspielraum 167 der mittleren Klaue 137, da der erste Anschlag 165 an der oberen Klaue 135 beziehungsweise der zweite Anschlag 166 an der unteren Klaue 136 anliegen, bevor die mittlere Klaue 137 an der oberen Klaue 135 beziehungsweise der unteren Klaue 136 anliegt. Werden die pneumatischen Muskeln 163, 164 vollständig zusammengezogen (nicht in FIG 10 gezeigt), so liegt der erste Anschlag 165 an der oberen Klaue 135 an und der zweite Anschlag 166 an der unteren Klaue 136 an, so dass sich die mittlere Klaue 137 nicht mehr bewegen kann.

In den Ausgestaltungen der FIG 9 und 10 ergeben sich konstruktive Vorteile dadurch, dass eine Druckluft, die zum Ansteuern der pneumatischen Muskeln 163, 164 benötigt wird, nur an einem der beiden Kontaktelemente 121, 122 bereitgestellt werden muss. Dies ermöglicht einen einfacheren Aufbau des Begrenzungselements 160.

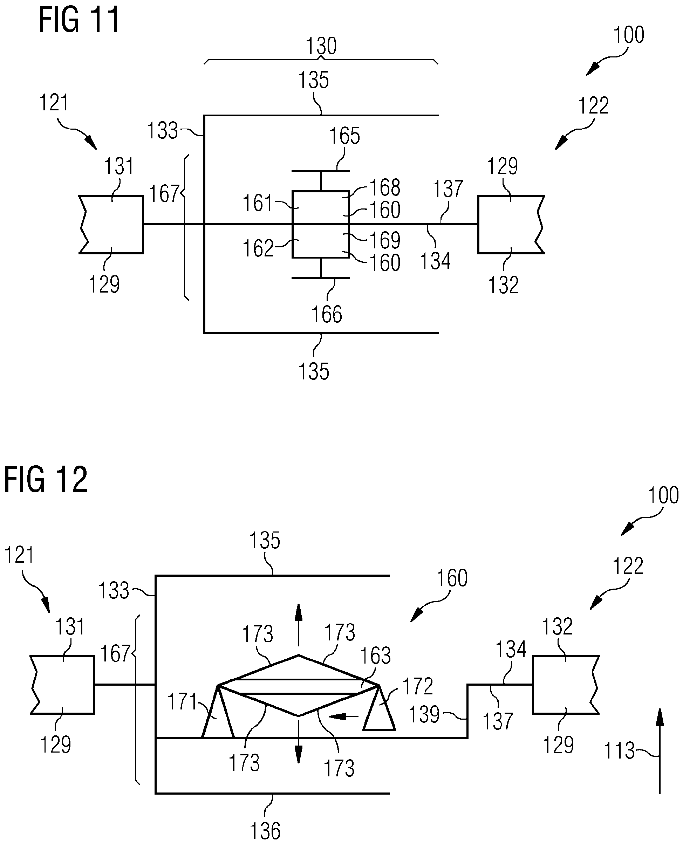

FIG 11 zeigt ein weiteres Ausführungsbeispiel eines Ausschnitts des Stromabnehmers 100, bei dem ein Bereich zwischen den Oberrohrenden 131, 132 vergrößert dargestellt ist. Die Ausgleichsvorrichtung 130 weist ein erstes verschiebbares Element 133 und ein zweites verschiebbares Element 134 auf. Das erste verschiebbare Element 133 ist mit dem ersten Kontaktelement 121, hier mittels Verbindung zum ersten Oberrohr 131, verbunden, wobei auch an andere dem ersten Kontaktelement 121 zuzuordnende Elemente wie beispielsweise dem Oberarm 112 des ersten Kontaktelements 121 verbunden sein kann. Das zweite verschiebbare Element 134 ist mit dem zweiten Kontaktelement 122, hier mittels Verbindung zum zweiten Oberrohr 132, verbunden, wobei auch an andere dem zweiten Kontaktelement 122 zuzuordnende Elemente wie beispielsweise dem Oberarm 112 des zweiten Kontaktelements 122 verbunden sein kann. Das erste verschiebbare Element 133 und das zweite verschiebbare Element 134 sind in vertikaler Richtung 113 gegeneinander verschiebbar. Das erste verschiebbare Element 133 weist eine obere Klaue 135 und eine untere Klaue 136 auf. Das zweite verschiebbare Element 134 weist eine mittlere Klaue 137 auf. Die mittlere Klaue 137 ist zwischen der oberen Klaue 135 und der unteren Klaue 136 angeordnet. In einer Grundeinstellung ist die mittlere Klaue 137 zwischen der oberen Klaue 135 und der unteren Klaue 136 beweglich. Diese Grundeinstellung ist in FIG 11 dargestellt. Die mittlere Klaue 137 kann zwischen der oberen Klaue 135 und der unteren Klaue 136 bewegt werden. Dadurch können die in den FIG 2 und 3 erläuterten Kontaktelementpositionen 124, 125, 126 eingenommen werden. Die Ausgleichsvorrichtung 130 kann hierzu einen beispielsweise aus dem Stand der Technik bekannten und hier nicht gezeigten Seilzug aufweisen, um bei Absenken oder Anheben des ersten Kontaktelements 121 das zweite Kontaktelement um denselben Betrag Anzuheben beziehungsweise Abzusenken.

In FIG 11 ist ferner ein Begrenzungselement 160 dargestellt. Das Begrenzungselement 160 beinhaltet ein erstes Stellelement 161 und ein zweites Stellelement 162. Das erste Stellelement 161 ist als erster Pneumatikzylinder 168 ausgestaltet und mit einem ersten Anschlag 165 verbunden. Das zweite Stellelement ist als zweiter Pneumatikzylinder 169 ausgestaltet und mit einem zweiten Anschlag 166 verbunden. Die Pneumatikzylinder 168, 169 sind dabei analog zu FIG 10 an der mittleren Klaue 137 angeordnet, können aber auch analog zu den FIG 6 bis 9 angeordnet werden. Die Pneumatikzylinder 168, 169 können die Anschläge 165, 166 auf die obere Klaue 135 beziehungsweise die untere Klaue 136 zu bewegen und so den Bewegungsspielraum 167 der mittleren Klaue 137 einschränken. Durch die Abmessungen der Pneumatikzylinder 168, 169 steht dabei nicht der volle Raum zwischen der ersten Klaue 135 und der zweiten Klaue 136 zur Verfügung, wobei gegebenenfalls ein Abstand zwischen der ersten Klaue 135 und der zweiten Klaue 136 im Vergleich zur Ausgestaltung der FIG 6 bis 10 erhöht werden kann.

Die Anschläge 165, 166 können beispielsweise als Platten oder als Bolzen ausgestaltet sein. Alternativ zur Darstellung der FIG 11 kann auch vorgesehen sein, die Anschläge 165, 166 beispielsweise mit einem Schrittmotor zu bewegen. Ferner kann beispielsweise vorgesehen werden, die Pneumatikzylinder 168, 169 analog zu den FIG 6 bis 10 anders anzuordnen, beispielsweise den ersten Pneumatikzylinder 168 an der oberen Klaue 135 und den zweiten Pneumatikzylinder 169 an der unteren Klaue 136 oder den ersten Pneumatikzylinder an der unteren Klaue 136 und den zweiten Pneumatikzylinder 169 an der mittleren Klaue 137 und zugewandt zur oberen Klaue 135.

FIG 12 zeigt ein weiteres Ausführungsbeispiel eines Ausschnitts des Stromabnehmers 100, bei dem ein Bereich zwischen den Oberrohrenden 131, 132 vergrößert dargestellt ist. Die Ausgleichsvorrichtung 130 weist ein erstes verschiebbares Element 133 und ein zweites verschiebbares Element 134 auf. Das erste verschiebbare Element 133 ist mit dem ersten Kontaktelement 121, hier mittels Verbindung zum ersten Oberrohr 131, verbunden, wobei auch an andere dem ersten Kontaktelement 121 zuzuordnende Elemente wie beispielsweise dem Oberarm 112 des ersten Kontaktelements 121 verbunden sein kann. Das zweite verschiebbare Element 134 ist mit dem zweiten Kontaktelement 122, hier mittels Verbindung zum zweiten Oberrohr 132, verbunden, wobei auch an andere dem zweiten Kontaktelement 122 zuzuordnende Elemente wie beispielsweise dem Oberarm 112 des zweiten Kontaktelements 122 verbunden sein kann. Das erste verschiebbare Element 133 und das zweite verschiebbare Element 134 sind in vertikaler Richtung 113 gegeneinander verschiebbar. Das erste verschiebbare Element 133 weist eine obere Klaue 135 und eine untere Klaue 136 auf. Das zweite verschiebbare Element 134 weist eine mittlere Klaue 137 auf. Die mittlere Klaue 137 ist zwischen der oberen Klaue 135 und der unteren Klaue 136 angeordnet. Die mittlere Klaue 137 weist einen Versatz 139 auf, so dass die mittlere Klaue 137 im Bereich zwischen der oberen Klaue 135 und der unteren Klaue 136 unterhalb der im Zusammenhang mit den FIG 6 bis 11 erläuterten Ausgestaltungen angeordnet ist. In einer Grundeinstellung ist die mittlere Klaue 137 zwischen der oberen Klaue 135 und der unteren Klaue 136 beweglich. Diese Grundeinstellung ist in FIG 12 dargestellt. Die mittlere Klaue 137 kann zwischen der oberen Klaue 135 und der unteren Klaue 136 bewegt werden. Dadurch können die in den FIG 2 und 3 erläuterten Kontaktelementpositionen 124, 125, 126 eingenommen werden. Die Ausgleichsvorrichtung 130 kann hierzu einen beispielsweise aus dem Stand der Technik bekannten und hier nicht gezeigten Seilzug aufweisen, um bei Absenken oder Anheben des ersten Kontaktelements 121 das zweite Kontaktelement um denselben Betrag Anzuheben beziehungsweise Abzusenken.

In FIG 12 ist ferner ein Begrenzungselement 160 dargestellt. Das Begrenzungselement 160 weist ein festes Lager 171 auf, das mit der mittleren Klaue 137 verbunden ist. Ferner ist auf der mittleren Klaue 137 ein Gleitlager 172 des Begrenzungselements 160 angeordnet. Ein erster pneumatischer Muskel 163 verbindet das feste Lager 171 mit dem Gleitlager 172. Ferner ist zwischen dem festen Lager 171 und dem Gleitlager 172 ein Faltgestänge 173 angeordnet, wobei das Faltgestänge 173 bei einer Kontraktion des ersten pneumatischen Muskels 163 in vertikaler Richtung 113 größer wird und so den Bewegungsspielraum 167 der mittleren Klaue 137 einschränkt. Das Faltgestänge 173 kann dabei beispielsweise so angeordnet sein, dass in einem Grundzustand das Faltgestänge 173 in vertikaler Richtung bündig zur ersten Klaue 137 ist. Ferner kann vorgesehen sein, dass die Abmessungen von festem Lager 171 und Gleitlager 172 derart gewählt werden, dass der erste pneumatische Muskel 163 in einer Linie mit dem zweiten Oberrohrende 132 angeordnet ist.

Analoge Begrenzungselemente bestehend aus festem Lager 171, Gleitlager 172 pneumatischem Muskel 163 und Faltgestänge können beispielsweise auch an der oberen Klaue 135 und der unteren Klaue 136 vorgesehen sein, um den Bewegungsspielraum der mittleren Klaue 137 zu verringern.

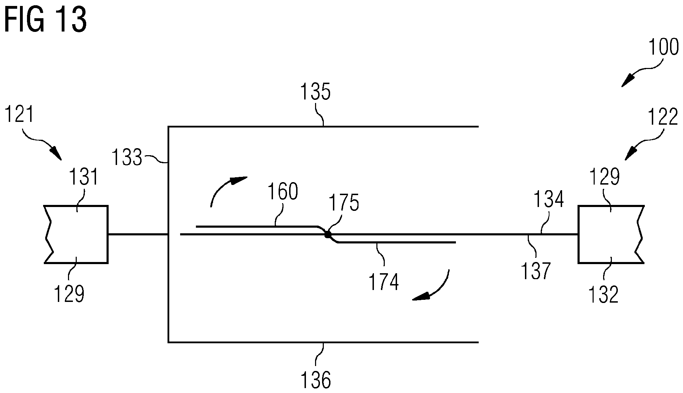

FIG 13 zeigt ein weiteres Ausführungsbeispiel eines Ausschnitts des Stromabnehmers 100, bei dem ein Bereich zwischen den Oberrohrenden 131, 132 vergrößert dargestellt ist. Die Ausgleichsvorrichtung 130 weist ein erstes verschiebbares Element 133 und ein zweites verschiebbares Element 134 auf. Das erste verschiebbare Element 133 ist mit dem ersten Kontaktelement 121, hier mittels Verbindung zum ersten Oberrohr 131, verbunden, wobei auch an andere dem ersten Kontaktelement 121 zuzuordnende Elemente wie beispielsweise dem Oberarm 112 des ersten Kontaktelements 121 verbunden sein kann. Das zweite verschiebbare Element 134 ist mit dem zweiten Kontaktelement 122, hier mittels Verbindung zum zweiten Oberrohr 132, verbunden, wobei auch an andere dem zweiten Kontaktelement 122 zuzuordnende Elemente wie beispielsweise dem Oberarm 112 des zweiten Kontaktelements 122 verbunden sein kann. Das erste verschiebbare Element 133 und das zweite verschiebbare Element 134 sind in vertikaler Richtung 113 gegeneinander verschiebbar. Das erste verschiebbare Element 133 weist eine obere Klaue 135 und eine untere Klaue 136 auf. Das zweite verschiebbare Element 134 weist eine mittlere Klaue 137 auf. Die mittlere Klaue 137 ist zwischen der oberen Klaue 135 und der unteren Klaue 136 angeordnet. In einer Grundeinstellung ist die mittlere Klaue 137 zwischen der oberen Klaue 135 und der unteren Klaue 136 beweglich. Diese Grundeinstellung ist in FIG 13 dargestellt. Die mittlere Klaue 137 kann zwischen der oberen Klaue 135 und der unteren Klaue 136 bewegt werden. Dadurch können die in den FIG 2 und 3 erläuterten Kontaktelementpositionen 124, 125, 126 eingenommen werden. Die Ausgleichsvorrichtung 130 kann hierzu einen beispielsweise aus dem Stand der Technik bekannten und hier nicht gezeigten Seilzug aufweisen, um bei Absenken oder Anheben des ersten Kontaktelements 121 das zweite Kontaktelement um denselben Betrag Anzuheben beziehungsweise Abzusenken.

In FIG 13 ist ferner ein Begrenzungselement 160 dargestellt. Das Begrenzungselement 160 weist ein Kippelement 174 auf, das um eine an der mittleren Klaue 137 angeordneten Antriebsachse 175 drehbar beziehungsweise kippbar ist. Dies ist durch Pfeile in FIG 13 angedeutet. Durch das Kippen des Kippelements 174 kann die Bewegung der mittleren Klaue 137 zwischen der oberen Klaue 135 und der unteren Klaue 136 eingeschränkt werden. Analog ist ebenfalls denkbar, zwei Kippelemente 174 vorzusehen, jeweils eines an der oberen Klaue 135 und eines an der unteren Klaue 136.

In allen Ausgestaltungen der FIG 6 bis 13 kann gegebenenfalls die Ausgleichsvorrichtung umgedreht werden. In diesen Fällen wäre das erste bewegliche Element 133 mit der oberen Klaue 135 und der unteren Klaue 136 am zweiten Oberrohrende 132 und das zweite bewegliche Element 134 mit der mittleren Klaue 137 am ersten Oberrohrende 131 angeordnet. Ferner sind alle der in den FIG 6 bis 13 gezeigten Ausgestaltungen sowohl die Bewegungen der Kontaktelemente 121, 122 wie in FIG 2 gezeigt als auch die Bewegungen der Kontaktelemente 121, 122 wie in FIG 3 gezeigt möglich. Im ersten Fall verschieben sich die verschiebbaren Elemente 133, 134 gegeneinander in vertikaler Richtung 113 und auch senkrecht zur vertikalen Richtung 113. Alternativ kann hier vorgesehen sein, dass die verschiebbaren Elemente 133,134 schwimmend an den Oberrohren 129 angeordnet sind und relativ zu den Oberrohren 129 verschiebbar sind. Im zweiten Fall ist nur eine Verschiebung der verschiebbaren Elemente 133, 134 gegeneinander in vertikaler Richtung 113 erforderlich.

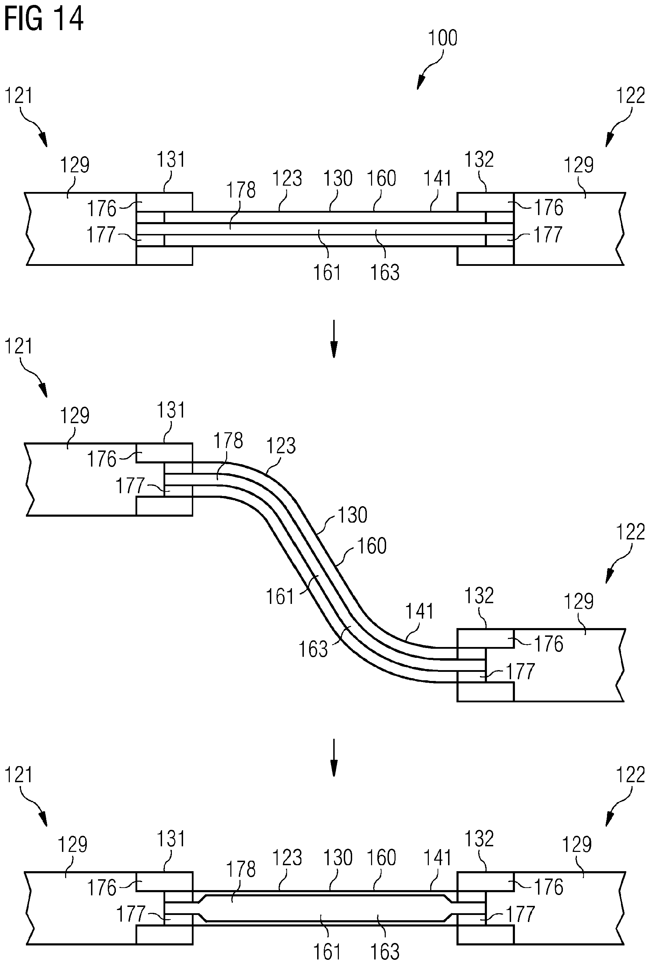

FIG 14 zeigt ein weiteres Ausführungsbeispiel eines Ausschnitts des Stromabnehmers 100, bei dem ein Bereich zwischen den Oberrohrenden 131, 132 der Kontaktelemente 121, 122 vergrößert dargestellt ist. An den Oberrohrenden 131, 132 befindet sich jeweils ein Lager 176 und ein im Lager 176 entlang des jeweiligen Oberrohrohres 129 verschiebbares Lagerelement 177. Ein erster pneumatischer Muskel 163 ist als erstes Stellelement 161 an den Lagerelementen 177 angeordnet und mit ihnen verbunden. Zwischen den Oberrohrenden 131, 132 ist ferner eine Schutzhülle 141 angeordnet, die den ersten pneumatischen Muskel 163 vor Verschmutzung schützen kann. In einer in FIG 14 beinhalteten oberen Darstellung sind dabei die Lagerelemente 177 jeweils innen in den Lagern 176 angeordnet, also möglichst weit voneinander entfernt. Der erste pneumatische Muskel 163 ist entspannt. Dadurch befinden sich die Oberrohrenden 131, 132 auf einer Ebene, wie es beispielsweise der ersten Kontaktelementposition 124 der FIG 3 entspricht. In einer mittleren Darstellung der FIG 14 sind die Kontaktelemente 121, 122 gegeneinander verschoben in die dritte Kontaktelementposition der FIG 3. Dabei bleibt der erste pneumatische Muskel 163 entspannt, die Lagerelemente 177 bewegen sich jedoch in den Lagern 176 nach außen, also aufeinander zu. In dieser Position ist der maximale vertikale Abstand erreicht. Um den maximalen vertikalen Abstand zu begrenzen, kann der erste pneumatische Muskel 163 zusammengezogen werden. Dies ist in einer unteren Darstellung der FIG 14 für einen vollständig zusammengezogenen ersten pneumatischen Muskel 163 dargestellt. Dadurch befinden sich die Oberrohrenden 131, 132 wieder auf einer Ebene, wie es beispielsweise der ersten Kontaktelementposition 124 der FIG 3 entspricht. Gegebenenfalls kann auch eine vollständige Kontraktion des ersten pneumatischen Muskels 163 nur zu einer Verringerung des maximalen vertikalen Abstands führen, so dass das erste Kontaktelement 121 und das zweite Kontaktelement 122 auf unterschiedlichen Positionen, jedoch nicht so weit voneinander entfernt wie in der mittleren Darstellung, angeordnet sind. Der pneumatische Muskel 163, die Lager 176 und die Lagerelemente 177 bilden zusammen mit der Schutzhülle 141 sowohl die Ausgleichsvorrichtung 130 als auch das Begrenzungselement 160. Die Schutzhülle 141 ist nicht zwingend erforderlich und kann gegebenenfalls weggelassen werden. Der erste pneumatische Muskel 163 wirkt in dieser Ausgestaltung als Zugvorrichtung 178. Es können auch andere Zugvorrichtungen 178 vorgesehen werden, beispielsweise mittels eines Stellantriebs.

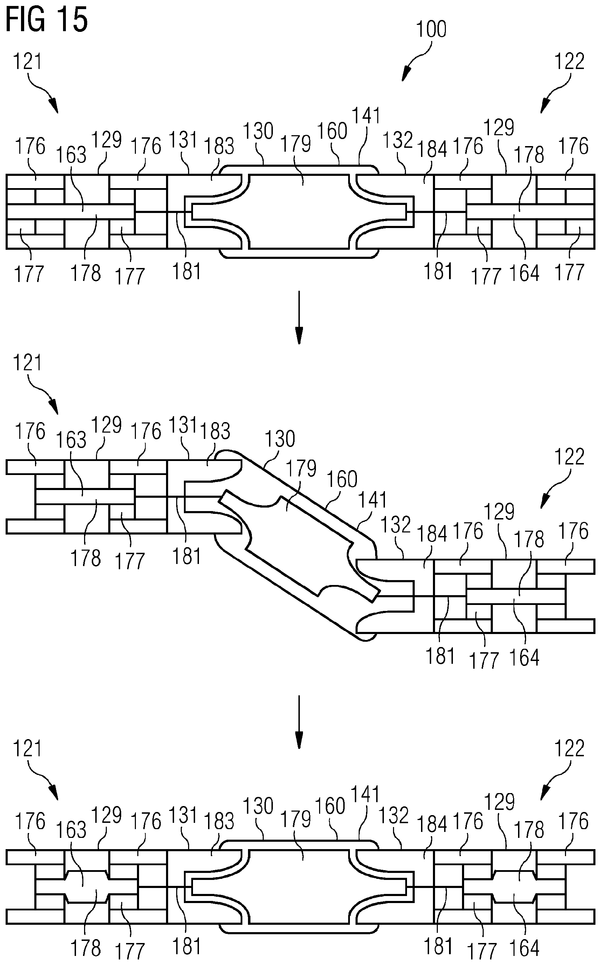

FIG 15 zeigt ein weiteres Ausführungsbeispiel eines Ausschnitts des Stromabnehmers 100, bei dem ein Bereich zwischen den Oberrohrenden 131, 132 der Kontaktelemente 121, 122 vergrößert dargestellt ist. An den Oberrohrenden 131, 132 befindet sich jeweils ein Lager 176 und ein im Lager 176 entlang des jeweiligen Oberrohrohres 129 verschiebbares Lagerelement 177. Weiter innen in den Oberrohren 129 befindet sich jeweils ein weiteres Lager 176 und ein im weiteren Lager 176 entlang des jeweiligen Oberrohrohres 129 verschiebbares weiteres Lagerelement 177. Zwischen den Lagerelementen 176 des Oberrohres 129 des ersten Kontaktelements 121 befindet sich ein erster pneumatischer Muskel 163. Zwischen den Lagerelementen 176 des Oberrohres 129 des zweiten Kontaktelements 122 befindet sich ein zweiter pneumatischer Muskel 164. Zwischen den Oberrohrenden 131, 132 ist ein Formkörper 179 angeordnet, der jeweils mit einer Verbindung 181, beispielsweise einem Seil, mit den pneumatischen Muskeln 163, 164 verbunden ist. Das erste Oberrohrende 131 weist ferner eine erste Aufnahme 183 auf, die an den Formkörper 179 angepasst ist. Das zweite Oberrohrende 132 weist eine zweite Aufnahme 184 auf, die an den Formkörper 179 angepasst ist. In einer oberen Darstellung der FIG 15 befinden sich die Lagerelemente 177 jeweils innen in den Oberrohren 129 und die pneumatischen Muskeln 163, 164 sind entspannt. Dadurch befinden sich die Oberrohrenden 131, 132 auf einer Ebene, wie es beispielsweise der ersten Kontaktelementposition 124 der FIG 3 entspricht. In einer mittleren Darstellung der FIG 15 sind die Kontaktelemente 121, 122 gegeneinander verschoben in die dritte Kontaktelementposition der FIG 3. Dabei bleiben die pneumatischen Muskeln 163, 164 entspannt, die Lagerelemente 177 bewegen sich jedoch in den Lagern 176 nach außen, also aufeinander zu. In dieser Position ist der maximale vertikale Abstand erreicht. Um den maximalen vertikalen Abstand zu begrenzen, können die pneumatischen Muskeln 163, 164 zusammengezogen werden. Dies ist in einer unteren Darstellung der FIG 15 für vollständig zusammengezogene pneumatische Muskeln 163, 164 dargestellt. Dadurch befinden sich die Oberrohrenden 131, 132 wieder auf einer Ebene, wie es beispielsweise der ersten Kontaktelementposition 124 der FIG 3 entspricht. Gegebenenfalls kann auch eine vollständige Kontraktion der pneumatischen Muskeln 163, 164 nur zu einer Verringerung des maximalen vertikalen Abstands führen, so dass das erste Kontaktelement 121 und das zweite Kontaktelement 122 auf unterschiedlichen Positionen, jedoch nicht so weit voneinander entfernt wie in der mittleren Darstellung, angeordnet sind. Die pneumatischen Muskeln 163, 164, die Lager 176 und die Lagerelemente 177 bilden zusammen mit den Verbindungen 181, den Aufnahmen 183, 184, dem Formkörper 179 und einer Schutzhülle 141 sowohl die Ausgleichsvorrichtung 130 als auch das Begrenzungselement 160. Die Schutzhülle 141 ist nicht zwingend erforderlich und kann gegebenenfalls weggelassen werden. Auch in dieser Ausgestaltung wirken die pneumatischen Muskeln 163, 164 als Zugvorrichtung 178. Es können auch andere Zugvorrichtungen 178 vorgesehen werden, beispielsweise mittels eines Stellantriebs.

In den Ausführungsbeispielen der FIG 14 und 15 ist technisch bedingt nur die Verschiebung der Kontaktelemente 121, 122 gegeneinander wie in FIG 3 gezeigt möglich, da hier nur vertikale Kräfte auf die Oberrohrenden 131, 132 wirken können. Bewegen sich die Oberrohrenden 131, 132 auf einer Kreisbahn wie in FIG 2 gezeigt, ist ein Begrenzen der maximalen vertikalen Auslenkung mittels der Zugvorrichtung 178 wie in den FIG 14 und 15 gezeigt nicht möglich.

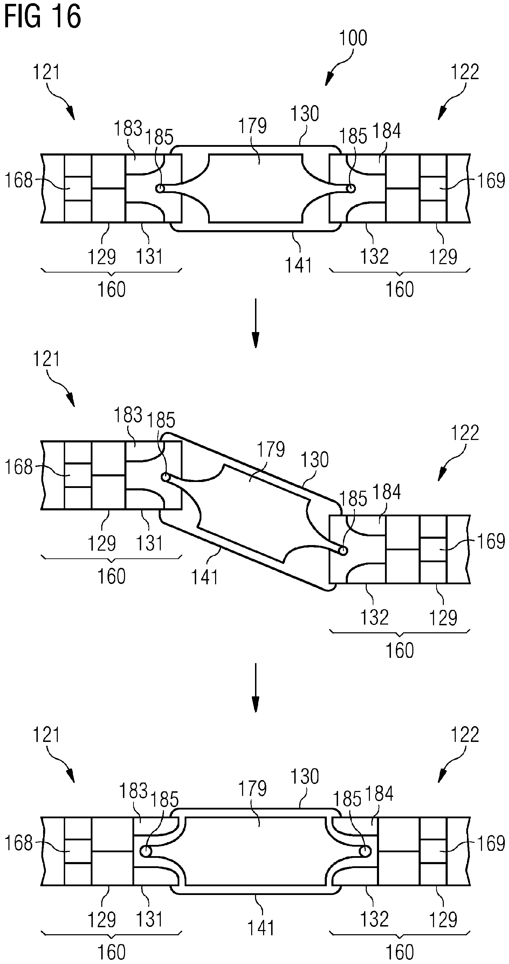

FIG 16 zeigt ein weiteres Ausführungsbeispiel eines Ausschnitts des Stromabnehmers 100, bei dem ein Bereich zwischen den Oberrohrenden 131, 132 der Kontaktelemente 121, 122 vergrößert dargestellt ist. Ein Formkörper 179 ist mittels Drehlagern 185 mit den Oberrohrenden 131, 132 verbunden. Im Oberrohr 129 des ersten Kontaktelements 121 ist ein erster Pneumatikzylinder 168 angeordnet, der mit einer ersten Aufnahme 183, die an den Formkörper 179 angepasst ist, verbunden ist. Im Oberrohr 129 des zweiten Kontaktelements 122 ist ein zweiter Pneumatikzylinder 169 angeordnet, der mit einer zweiten Aufnahme 184, die an den Formkörper 179 angepasst ist, verbunden ist. In einer oberen Darstellung der FIG 16 befinden sich die Oberrohrenden 131, 132 auf einer Ebene, wie es beispielsweise der ersten Kontaktelementposition 124 der FIG 2 entspricht. Die Aufnahmen 183, 184 sind nicht im Eingriff mit dem Formkörper 179. Durch die Drehlager 185 werden die Oberrohrenden auf eine Kreisbahn gezwungen. In einer mittleren Darstellung der FIG 16 sind die Kontaktelemente 121, 122 gegeneinander verschoben in die dritte Kontaktelementposition der FIG 2. Die Aufnahmen 183, 184 sind nicht im Eingriff mit dem Formkörper 179. In dieser Position ist der maximale vertikale Abstand erreicht. Um den maximalen vertikalen Abstand zu begrenzen, können die Aufnahmen 183, 184 mittels der Pneumatikzylinder 168, 169 in Eingriff mit dem Formkörper 179 gebracht werden. Dies ist in einer unteren Darstellung der FIG 16 für vollständig ausgefahrene Pneumatikzylinder 168, 169 dargestellt. Dadurch befinden sich die Oberrohrenden 131, 132 wieder auf einer Ebene, wie es beispielsweise der ersten Kontaktelementposition 124 der FIG 2 entspricht. Gegebenenfalls kann auch ein vollständiges Ausfahren der Pneumatikzylinder 168, 169 nur zu einer Verringerung des maximalen vertikalen Abstands führen, so dass das erste Kontaktelement 121 und das zweite Kontaktelement 122 auf unterschiedlichen Positionen, jedoch nicht so weit voneinander entfernt wie in der mittleren Darstellung, angeordnet sind. Der Formkörper 179 mit den Drehlagern 185 bildet hier die Ausgleichsvorrichtung 130, die Pneumatikzylinder 168, 169 können zusammen mit den Aufnahmen 183, 184 als Begrenzungselement 160 dienen. Ebenfalls kann eine optionale Schutzhülle 141 um den Formkörper 179 angeordnet sein. Anstelle der Pneumatikzylinder 168, 169 können auch andere Antriebe für die Aufnahmen 183, 184 vorgesehen werden, beispielsweise Stellantriebe oder Schrittmotoren.

Die Erfindung umfasst ferner ein Verfahren zum Betreiben eines Stromabnehmersystems mit einem Stromabnehmer 100 wie in den FIG 1 bis 16 erläutert. In diesem Verfahren kann eine Steuereinheit des Stromabnehmersystems einen Steuerbefehl empfangen und anschließend den maximalen vertikalen Abstand anhand des Steuerbefehls durch Einwirken auf das Begrenzungselement 160 begrenzen. Dies kann beispielsweise dadurch erfolgen, dass ein pneumatischer Muskel 163, 164 oder ein Pneumatikzylinder 168, 169 mit entsprechender Druckluft beaufschlagt werden. Alternativ kann die Steuereinheit auch auf einen alternativen Antrieb des Begrenzungselements 160 einwirken. Der Steuerbefehl kann dabei anhand eines Sensors erteilt sein. Beispielsweise kann mittels eines Beschleunigungssensors und/oder eines Lenkeinschlagsensors ein Ausweichmanöver erkannt werden, und neben einem Befehl zum Abdrahten auch der Steuerbefehl für das Begrenzungselement 160 ausgegeben werden. Ferner kann der Sensor auch ein GPS-Sensor sein, wenn beispielsweise in bestimmten Bereichen (gegebenenfalls im Bereich einer Brücke) der maximale vertikale Abstand verringert werden soll.

Die in den FIG 6 bis 16 gezeigten Ausgestaltungen des Stromabnehmers 100 zeigen jeweils die Ausgleichsvorrichtung 130 und das Begrenzungselement 160 zwischen den Oberrohren 129 der Kontaktelemente 121, 122. Die Ausgleichsvorrichtung 130 und das Begrenzungselement 160 können auch anders angeordnet sein, beispielsweise zwischen den den Kontaktelementen 121, 122 jeweils zugeordneten Oberarmen 112 oder zwischen den Kontaktelementen 121, 122 direkt.

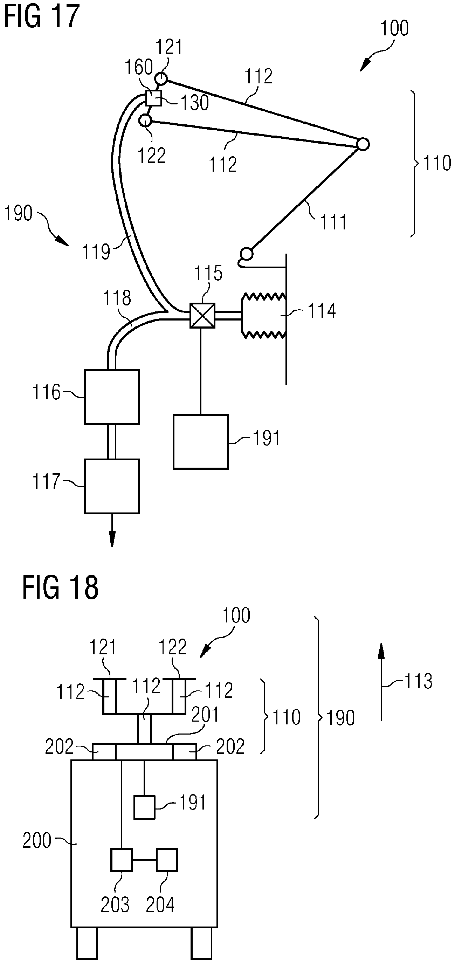

FIG 17 zeigt ein Stromabnehmersystem 190 mit einem Stromabnehmer 100, der einem der Stromabnehmer 100 der FIG 1 bis 16 entsprechen kann. Der Stromabnehmer 100 weist insbesondere eine Ausgleichsvorrichtung 130 und ein Begrenzungselement 160 auf. Ein Balg 114 kann dazu dienen, den Unterarm 111 und die Oberarme 112 (gegebenenfalls auch zwei Unterarme 111) zu bewegen. Dabei kann insbesondere vorgesehen sein, dass der Balg 114 mit Druckluft beaufschlagt wird, wenn der Stromabnehmer 100 angedrahtet werden soll. Eine Steuereinheit 191 kann beispielsweise einen Druck im Balg 114 steuern. Ferner kann die Steuereinheit 114 ein Ventil 115 steuern, das mit einem Windkessel 116 und einer Drossel 117 über eine erste Druckleitung 118 verbunden ist. Wird das Ventil 115 geöffnet, strömt Druckluft über den Windkessel 116 und die Drossel 117 aus dem Balg und der Stromabnehmer 100 senkt sich, wird also abgedrahtet. Dieser Mechanismus kann zusätzlich direkt zum Ansteuern des Begrenzungselements 160 genutzt werden, wenn das Begrenzungselement 160 pneumatische Muskeln 163, 164 und/oder Pneumatikzylinder 168, 169 aufweist. Dann kann mit einer zweiten Druckleitung 118 die aus dem Balg 114 austretende Luft zum Begrenzungselement 160 geführt werden. Wird beispielsweise ein Steuerbefehl von der Steuereinheit 191 empfangen, nach dem ein möglichst schnelles Abdrahten erforderlich ist, beispielsweise da ein Fahrzeug 200 eine Ausweichbewegung durchführt und deshalb ein Abdrahten nötig ist, kann mit diesem Mechanismus zusätzlich der maximale vertikale Abstand verringert werden und damit die Einhaltung eines Lichtraumprofils erleichtert sein. Der Steuerbefehl für das Abdrahten ist in diesem Fall identisch mit dem Steuerbefehl zur Reduktion des maximalen vertikalen Abstands. Da auch die pneumatischen Muskeln 163, 164 und/oder die Pneumatikzylinder 168, 169 über Windkessel 116 und Drossel 117 entlüftet werden, stellt sich nach einigen Sekunden wieder der maximale vertikale Abstand am Ausgleichselement 130 ein. Zu diesem Zeitpunkt ist das Abdrahten jedoch zumindest größtenteils vollendet, so dass ein wieder größerer maximaler vertikaler Abstand keine Lichtraumprofilverletzung mehr zur Folge hat.

In anderen Ausgestaltungen kann die Steuereinheit 191 auch direkt auf das Begrenzungselement 160 einwirken und die pneumatischen Muskeln 163, 164 und/oder die Pneumatikzylinder 168, 169 und/oder andere Antriebe ansteuern.

FIG 18 zeigt ein Fahrzeug 200 mit einem erfindungsgemäßen Stromabnehmer 100 als Teil eines Stromabnehmersystems 190. Die Steuereinheit 191 ist dabei im Fahrzeug 200 angeordnet. Ferner ist der Stromabnehmer 100 auf einer Platte 201 angeordnet, die mit zwei Bälgen 201 mit dem Fahrzeug 200 verbunden ist. Das Halteelement 110 weist eine Längsachse auf, die senkrecht zur vertikalen Richtung 113 ist. Das Halteelement 110 weist ferner einen Antrieb zur Ausrichtung des Halteelements 110 bezüglich der Längsachse auf. Dieser Antrieb ist mittels den Bälgen 202 realisiert und kann dazu genutzt werden, den Stromabnehmer 100 unabhängig von Wankbewegungen des Fahrzeugs 200 senkrecht zu halten. Das Fahrzeug weist ferner optional einen Akkumulator 203 und einen Elektromotor 204 auf, die mit dem Stromabnehmer 100 mit Energie versorgt werden können.

Die vorgeschlagene Hubdifferenzreduktion mittels des Begrenzungselements 160 ermöglicht, weniger Kompromisse zwischen Sicherheit (Einhaltung des Lichtraumprofils) und Wirtschaftlichkeit (Verfügbarkeit) eingehen zu müssen. Gerade in Anwendungen, bei denen ein zweipoliger Stromabnehmer 100 große Hubdifferenzen realisieren muss (beispielsweise raues Terrain bei Mienenanwendungen), kann die beschriebene Hubdifferenzreduzierung dazu führen, den für die Infrastruktur notwendigen Aufwand deutlich zu reduzieren, ohne Sicherheitsüberlegungen zu vernachlässigen.

Der Stromabnehmer 100 kann gegebenenfalls auf bestehende Fahrzeuge 200 nachgerüstet werden. Gerade weil die Kontaktgüte oft von zu großen Hubdifferenzen verschlechtert wird, führt eine solche Verbesserung auch im Lastkraftwagenbereich potenziell zu einem stabileren Betrieb bei gleichzeitig verbesserter Sicherheit bei dynamischen Fahrmanövern aus dem angedrahteten Zustand. Auch Anwendungen mit punktuell verminderter erlaubter Hubdifferenz (beispielsweise bei Brücken) sind mit diesem Stromabnehmer 100 denkbar.

Der maximale vertikale Abstand und damit die Hubdifferenz kann mit diesem Stromabnehmer in Bereichen von 250 Millimeter liegen, so dass auch größere Hindernisse überfahren werden können. Die Begrenzung mittels des Begrenzungselements 160 kann dazu führen, dass der maximale vertikale Abstand und damit die Hubdifferenz nur noch im Bereich von 70 Millimeter oder gegebenenfalls noch kleiner ist.

Oft ist es schwieriger, langwieriger und teurer, die Infrastruktur für eine Anwendung zu ertüchtigen als einen Stromabnehmer 100 dafür auszulegen. Mit der vorgeschlagenen Erfindung ist mit einfachen Mitteln und unter Ausnutzung vorhandener Funktionen (Sensorik) und Versorgungen (Druckluft) im Fahrzeug 200 möglich, eine deutliche Verbesserung zu erreichen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Stromabnehmer (100) für ein Fahrzeug (200), aufweisend ein Halteelement (110), ein erstes Kontaktelement (121) und ein zweites Kontaktelement (122), wobei das Halteelement (110) eingerichtet ist, mit dem Fahrzeug (200) verbunden zu werden und die Kontaktelemente (121, 122) zu halten, wobei mittels des Halteelements (110) zumindest zwei in vertikaler Richtung (113) unterschiedliche Positionen der Kontaktelemente (121, 122) eingestellt werden können, wobei der Stromabnehmer (100) ferner eine Ausgleichsvorrichtung (130) aufweist, wobei mittels der Ausgleichsvorrichtung (130) ein maximaler vertikaler Abstand zwischen dem ersten Kontaktelement (121) und dem zweiten Kontaktelement (122) eingestellt werden kann und wobei mittels eines Begrenzungselements (160) der maximale vertikale Abstand zwischen dem ersten Kontaktelement (121) und dem zweiten Kontaktelement (122) verringert werden kann.

2. Stromabnehmer (100) nach Anspruch 1, wobei das erste Kontaktelement (121) ein um eine Querachse drehbar gelagertes erstes Oberrohr (129) aufweist und das zweite Kontaktelement (122) ein um eine Querachse drehbar gelagertes zweites Oberrohr (129) aufweist, wobei die Querachse senkrecht zur vertikalen Richtung ist, wobei die Ausgleichsvorrichtung (130) zwischen dem ersten Oberrohr (129) und dem zweiten Oberrohr (129) angeordnet und mit einem ersten Oberrohrende (131) des ersten Oberrohrs (129) und einem zweiten Oberrohrende (132) des zweiten Oberrohrs (129) mechanisch verbunden ist.

3. Stromabnehmer (100) nach Anspruch 2, wobei das Begrenzungselement (160) ein mechanisches Stellelement (163, 164, 168, 169) aufweist, wobei das mechanische Stellelement (163, 164, 168, 169) in einer ersten Position einen größeren Abstand zwischen dem ersten Oberrohrende (131) und dem zweiten Oberrohrende (132) zulässt als in einer zweiten Position.

4. Stromabnehmer (100) nach einem der Ansprüche 1 bis 3, wobei zwischen dem ersten Kontaktelement (121) und dem zweiten Kontaktelement (122) ein isolierendes Mittelstück (123) angeordnet ist, wobei das isolierende Mittelstück (123) Teil der Ausgleichsvorrichtung (130) ist.

5. Stromabnehmer (100) nach einem der Ansprüche 1 bis 4, wobei die Ausgleichsvorrichtung (130) ein erstes verschiebbares Element (133) und ein zweites verschiebbares Element (134) aufweist, wobei das erste verschiebbare Element (133) mit dem ersten Kontaktelement (121) verbunden ist und das zweite verschiebbare Element (134) mit dem zweiten Kontaktelement (122) verbunden ist, wobei das erste verschiebbare Element (133) und das zweite verschiebbare Element (134) in vertikaler Richtung (113) gegeneinander verschiebbar sind, wobei das erste verschiebbare Element (133) eine obere Klaue (135) und eine untere Klaue (136) aufweist, wobei das zweite verschiebbare Element (134) eine mittlere Klaue (137) aufweist, wobei die mittlere Klaue (137) zwischen der oberen Klaue (135) und der unteren Klaue (136) angeordnet ist, wobei in einer Grundeinstellung die mittlere (137) Klaue zwischen der oberen Klaue (135) und der unteren Klaue (136) beweglich ist.

6. Stromabnehmer (100) nach Anspruch 5, wobei in einer Begrenzungseinstellung ein Bewegungsspielraum (167) der mittleren Klaue (137) zwischen der oberen Klaue (135) und der unteren Klaue (136) mittels des Begrenzungselements (160) begrenzt wird.

7. Stromabnehmer (100) nach einem der Ansprüche 1 bis 6, wobei das Begrenzungselement (160) eine Zugvorrichtung (178) zwischen dem ersten Kontaktelement (121) und dem zweiten Kontaktelement (122) umfasst.

8. Stromabnehmer (100) nach Anspruch 7, wobei die Zugvorrichtung (178) eingerichtet ist, den Abstand zwischen dem ersten Kontaktelement (121) und dem zweiten Kontaktelement (122) zu verringern.

9. Stromabnehmer (100) nach Anspruch 7 oder 8, wobei das Begrenzungselement (160) ferner zwei Aufnahmen (183, 184) und einen formschlüssigen Körper (179) aufweist, wobei die Zugvorrichtung (178) eingerichtet ist, den formschlüssigen Körper (179) in Formschluss mit den Aufnahmen (183, 184) zu bringen.

10. Stromabnehmer (100) nach einem der Ansprüche 1 bis 9, wobei das Begrenzungselement (160) einen pneumatischen Muskel (163, 164) und/oder einen Pneumatikzylinder (168, 169) beinhaltet.

11. Stromabnehmer (100) nach Anspruch 10, wobei der pneumatische Muskel (163, 164) und/oder der Pneumatikzylinder (168, 169) mittels eines Ventils (115) gesteuert werden kann.

12. Stromabnehmer (100) nach Anspruch 11, wobei die zwei in vertikaler Richtung unterschiedlichen Positionen der Kontaktelemente (121, 122) mittels eines Balgs (114) eingestellt werden können, wobei beim Beaufschlagen des Balgs (114) mit Druck eine obere Position der Kontaktelemente (121, 122) und bei Entspannen des Balgs (114) eine untere Position der Kontaktelemente (121, 122) eingenommen wird, wobei eine Druckleitung (118) vom Balg (114) über ein Ventil (115) zum pneumatischen Muskel (163, 164) und/oder zum Pneumatikzylinder (168, 169) geführt wird und mittels des beim Entspannen des Balgs (114) austretenden Gases der pneumatische Muskel (163, 164) und/oder der Pneumatikzylinder (168, 169) mit Druck derart beaufschlagt wird, dass das Begrenzungselement (160) den maximalen vertikalen Abstand zwischen dem ersten Kontaktelement (121) und dem zweiten Kontaktelement (122) verringert.

13. Stromabnehmer (100) nach einem der Ansprüche 1 bis 12, wobei das Halteelement (110) eine Längsachse aufweist, die senkrecht zur vertikalen Richtung (113) ist, wobei das Halteelement (110) ferner einen Antrieb zur Ausrichtung des Halteelements (110) bezüglich der Längsachse aufweist.

14. Fahrzeug (200) mit einem Stromabnehmer (100) nach einem der Ansprüche 1 bis 13.

15. Verfahren zum Betreiben eines Stromabnehmersystems (190) mit einem Stromabnehmer (100) nach einem der Ansprüche 1 bis 13 und einer Steuereinheit (191), mit den folgenden Schritten:
- Empfangen eines Steuerbefehls;
- Begrenzen des maximalen vertikalen Abstands anhand des Steuerbefehls durch Einwirken auf das Begrenzungselement (160) .
